# EUROPEAN PATENT APPLICATION

(11) **EP 3 244 579 A1**
(43) Date of publication of application: **15.11.2017**
(21) Application number: 15876700.4
(22) Date of filing: 29.12.2015
(51) Int. Cl.: H04L 12/58

(54) **NETWORK RESOURCE PROCESSING METHOD, APPARATUS AND INSTANT MESSAGING SYSTEM**

(30) Priority: 05.01.2015 CN 201510001593
(71) Applicant: Alibaba Group Holding Limited, Grand Cayman (KY)
(72) Inventor: YANG, Wenxue, Hangzhou Zhejiang 311121 (CN)
(74) Representative: Branderhorst, Matthijs Pieter Arie
(86) International application number: PCT/CN2015/099535
(87) International publication number: WO 2016/110200

(57) **Abstract**

The present application provides a network resource processing method, apparatus and an instant messaging system. The method comprises: a first client receives network resource transferring information input in an instant messaging window by a first user using the first client during instant messaging with a second client; the first client transmits the network resource transferring information to a server side, so that the server side transfers the network resource of the first user to a second user using the second client according to the network resource transferring information. The present application can improve transferring efficiency of network resources.

## Description

### Technical Field

The present application relates to the field of Internet technologies, and in particular, to a network resource processing method, apparatus and an instant messaging system.

### Background Art

Instant messaging (IM) is the most popular communication way over the Internet at present, and a variety of IM software also emerges one after another. Service providers also constantly enrich and expand functions of the IM software. For example, in addition to being capable of real-time chatting and mutually transmitting information, WeChat further has additional functions such as network resource transferring (e.g., account transferring), and network resource sharing.

The existing IM tools implement other additional functions in a relatively complicated way, which generally needs to jump among a plurality of pages and requires a user to perform a multi-step operation. By taking the account transferring function provided by WeChat as an example, when it is necessary to conduct the account transfer to another user, a user needs to call out a function menu in a manner such as click, touch, or scroll, find out a transfer button therefrom, and click the button to enter an interface of WeChat contact. The user selects an object requiring account transfer and then jumps to an interface of transfer amount. After the user inputs the transfer amount and clicks OK, a password box is popped up, and account transfer is conducted after the user inputs the password and clicks OK.

It is thus clear that, when the user uses the network resource transferring function provided by the IM tool, the operations are relatively cumbersome, and as a result, the transferring efficiency of network resources is relatively low.

### Summary of the Invention

In multiple aspects of the present application, a network resource processing method, apparatus and an instant messaging system are provided, for improving the transferring efficiency of network resources.

In one aspect of the present application, a network resource processing method is provided, including:
receiving, by a first client, network resource transferring information input in an instant messaging window by a first user using the first client during instant messaging with a second client; and
transmitting, by the first client, the network resource transferring information to a server side, so that the server side transfers the network resource of the first user to a second user using the second client according to the network resource transferring information.

In another aspect of the present application, a network resource processing method is provided, including:
receiving, by a server side, network resource transferring information sent by a first client, the network resource transferring information being input to the first client through an instant messaging window by a first user using the first client during instant messaging of the first client with the second client; and
transferring, by the server side, the network resource of the first user to a second user using the second client according to the network resource transferring information.

In still another aspect of the present application, a network resource processing apparatus is provided and implemented in a first client, wherein the network resource processing apparatus includes:
a receiving module, configured to receive network resource transferring information input in an instant messaging window by a first user using the first client during instant messaging of the first client with a second client; and
a transmitting module, configured to transmit the network resource transferring information to a server side, so that the server side transfers the network resource of the first user to a second user using the second client according to the network resource transferring information.

In yet another aspect of the present application, a network resource processing apparatus is provided and implemented in a server side, wherein the network resource processing apparatus includes:
a receiving module, configured to receive network resource transferring information sent by a first client, the network resource transferring information being input to the first client through an instant messaging window by a first user using the first client during instant messaging of the first client with the second client; and
a resource transferring module, configured to transfer the network resource of the first user to a second user using the second client according to the network resource transferring information.

In a further aspect of the present application, an instant messaging system is provided, including: a first client, a second client, and a server side;
the first client being configured to receive network resource transferring information input in an instant messaging window by a first user using the first client during instant messaging with the second client, and transmit the network resource transferring information to the server side; and
the server side being configured to receive the network resource transferring information, and transfer the network resource of the first user to a second user using the second client according to the network resource transferring information.

In the present application, at the first client, a user is allowed to directly input network resource transferring information in an instant messaging window used during instant messaging to transfer network resources, and does not need to jump among a plurality of pages; the user only needs to input the network resource transferring information and does not need to perform a multi-step operation. Compared with the prior art, in the present application, the first client is relatively simple in the implementation logic of the network resource transferring function, user operations are also relatively simple, and thus the transferring efficiency of network resources can be improved.

### Brief Description of the Drawings

In order to describe the technical solutions in the embodiments of the present application more clearly, the following will briefly describe accompanying drawings to be used in the description of the embodiments or the prior art. It is apparent that the accompanying drawings in the following description are merely some embodiments of the present application, and those of ordinary skill in the art can also obtain other accompanying drawings according to the accompanying drawings without any creative efforts.
FIG. 1 is a schematic flowchart of a network resource processing method according to an embodiment of the present application;
FIG. 2 is a schematic flowchart of a network resource processing method according to another embodiment of the present application;
FIG. 3 is a schematic diagram of a user input operation in a process that the user uses an instant messaging client to conduct account transfer according to an embodiment of the present application;
FIG. 4 is a schematic structural diagram of a network resource processing apparatus according to an embodiment of the present application;
FIG. 5 is a schematic structural diagram of a network resource processing apparatus according to another embodiment of the present application; and
FIG. 6 is a schematic structural diagram of an instant messaging system according to an embodiment of the present application.

### Detailed Description

In order to make the objectives, technical solutions and advantages of the embodiments of the present application clearer, the technical solutions in the embodiments of the present application will be clearly and completely described below with reference to the accompanying drawings in the embodiments of the present application. It is apparent that the embodiments described are merely some, instead of all, of the embodiments of the present application. Based on the embodiments in the present application, all other embodiments obtained by those of ordinary skill in the art without any creative efforts shall be encompassed by the protection scope of the present application.

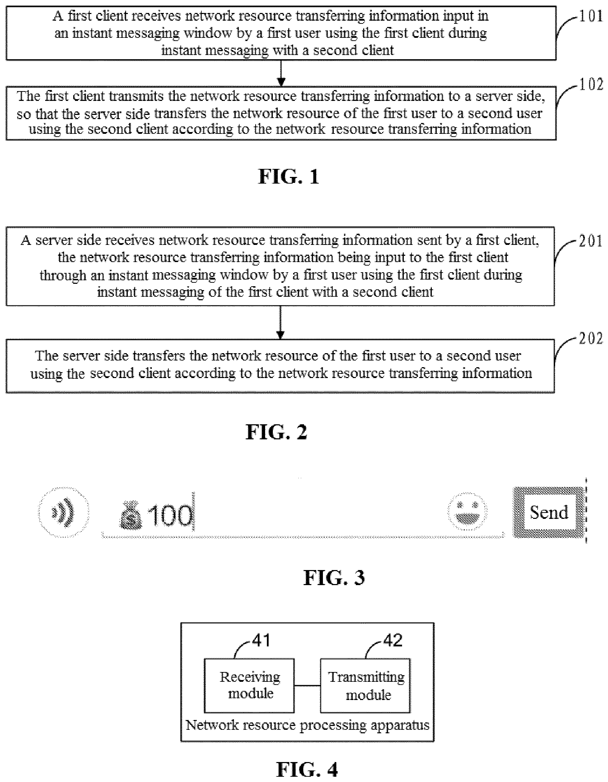

FIG. 1 is a schematic flowchart of a network resource processing method according to an embodiment of the present application. As shown in FIG. 1, the method includes:
101. A first client receives network resource transferring information input in an instant messaging window by a first user using the first client during instant messaging with a second client.
102. The first client transmits the network resource transferring information to a server side, so that the server side transfers the network resource of the first user to a second user using the second client according to the network resource transferring information.

This embodiment provides a network resource transferring method, which may be accomplished by a client in an instant messaging tool. The first client and the second client in this embodiment are respectively instant messaging clients. The instant messaging tool in this embodiment may be XinGe Push, Renren Desktop, ICQ, QQ, Gmail Talk, Fetion, WeChat, Laiwang, and so on.

With respect to the problem that existing instant messaging tools are relatively complex in the implementation logic of the network resource transferring function, it is generally necessary to jump among a plurality of pages, and the user is required to perform a multi-step operation, resulting in that the transferring efficiency of network resources is relatively low. This embodiment provides a network resource processing method in which the implementation logic is relatively simple and user operations are also relatively simple, for implementing network resource transferring, of which the specific procedure is as follows:
a first client receives network resource transferring information input in an instant messaging window by a first user using the first client during instant messaging with a second client, and transmits the network resource transferring information to a server side, so that the server side transfers the network resource of the first user to a second user using the second client according to the network resource transferring information.

In an optional implementation manner, the first client may automatically identify that it is network resource transferring information that the user inputs in the instant messaging window, and after identifying that the user's input ends, automatically transmit the network resource transferring information to the server side. For example, the network resource transferring information input by the user may carry a transfer mark in a designated position, for distinguishing content input by the user during normal instant messaging. For instance, it may be pre-determined that a beginning character of the network resource transferring information has to be a designated character, for example, *, !, #, @, A, AO and so on, for identifying that the current content is the network resource transferring information instead of conventional communication content.

In another optional implementation manner, the first user may perform an operation in the instant messaging window to send a transmitting instruction. Correspondingly, the first client receives the transmitting instruction sent in the instant messaging window by the first user; and transmits the network resource transferring information to the server side according to the received transmitting instruction, so that the server side transfers the network resource of the first user to the second user according to the network resource transferring information. For example, the user may click a send button in the instant messaging window to send a transmitting instruction, or may also send a transmitting instruction by an operation such as click, touch, or scroll.

It should be noted that the less the information amount of the network resource transferring information is, the simpler the input manner is, and the faster the user input is, the higher the transferring efficiency of network resources is. On this basis, an implementation manner of the network resource transferring information includes: a transfer shortcut key value and a transfer value. The transfer shortcut key value indicates a network resource transferring instruction. The transfer shortcut key value may be set to be relatively simple, or information whose input manner is relatively fast may be selected as the transfer shortcut key value. For example, the transfer shortcut key value may include at least one of an emoticon, a character, and voice information. Specifically, the transfer shortcut key value may be a specific letter, a special symbol, a specific number, or the like; or an emoticon or emoticon picture or the like provided by the instant messaging tool may be further set as the transfer shortcut key value.

For instance, the network resource of the first user may be a monetary resource of the user, which, for example, may be capital in a capital account of the first user. Correspondingly, transferring the network resource of the first user to the second user is actually a process of account transferring to the second user. The network resource of the first user may further be data traffic of the user, for example, 3G traffic or 4G traffic. Correspondingly, transferring the network resource of the first user to the second user is actually a process of reselling or passing on the network resource to the second user.

It can be seen from the above procedure that, in the method provided in this embodiment, the first user uses the first client to conduct instant messaging with the second user. During the instant messaging, if the first user needs to transfer the network resource to the second user, the first client does not need to jump to another page, the first user can directly input the network resource transferring information in the instant messaging window during the instant messaging, and then the first client submits the network resource transferring information to the server side to accomplish transferring of the network resource. Compared with the prior art, the first client in this embodiment is relatively simple in the implementation logic of the network resource transferring function, unlike the prior art that the first client needs to jump among a plurality of pages. This also simplifies operations of the user, the user does not need to perform a multi-step operation, and only needs to input the network resource transferring information in the current instant messaging window, and thus the transferring efficiency of network resources is improved, which is favorable for improving user experience.

FIG. 2 is a schematic flowchart of a network resource processing method according to another embodiment of the present application. As shown in FIG. 2, the method includes:
201. A server side receives network resource transferring information sent by a first client, the network resource transferring information being input to the first client through an instant messaging window by a first user using the first client during instant messaging of the first client with the second client.
202. The server side transfers the network resource of the first user to a second user using the second client according to the network resource transferring information.

This embodiment provides a network resource processing method, which may be accomplished by a server side in an instant messaging tool. The instant messaging tool in this embodiment may be XinGe Push, Renren Desktop, ICQ, QQ, Gmail Talk, Fetion, WeChat, Laiwang, and so on.

With respect to the problem that existing instant messaging tools are relatively complex in the implementation logic of the network resource transferring function, it is generally necessary to jump among a plurality of pages, and the user is required to perform a multi-step operation, resulting in that the transferring efficiency of network resources is relatively low. This embodiment provides a network resource processing method in which the implementation logic is relatively simple and user operations are also relatively simple, for implementing network resource transferring, of which the specific procedure is as follows:
a user using a first client inputs network resource transferring information in an instant messaging window during instant messaging of the first client with a second client, and the first client transmits the network resource transferring information to a server side. The server side receives the network resource transferring information sent by the first client, and transfers the network resource of the first user to a second user using the second client according to the network resource transferring information.

It should be noted that the less the information amount of the network resource transferring information is, the simpler the input manner is, and the faster the user input is, the higher the transferring efficiency of network resources is. On this basis, an implementation manner of the network resource transferring information includes: a transfer shortcut key value and a transfer value. The transfer shortcut key value indicates a network resource transferring instruction. The transfer shortcut key value may be set to be relatively simple, or information whose input manner is relatively fast may be selected as the transfer shortcut key value. For example, the transfer shortcut key value may include at least one of an emoticon, a character, and voice information. Specifically, the transfer shortcut key value may be a specific letter, a special symbol, a specific number, or the like; or an emoticon or emoticon picture or the like provided by the instant messaging tool may be further set as the transfer shortcut key value.

Based on the above, the manner in which the server side transfers the network resource of the first user to the second user using the second client according to the network resource transferring information may be as follows:
the server side parses the transfer shortcut key value into a network resource transferring instruction and a type of a to-be-transferred network resource; determines a transfer account of the first user and a transfer account of the second user according to the type of the to-be-transferred network resource; and performs a network resource transferring operation according to the network resource transferring instruction, the transfer account of the first user and the transfer account of the second user.

Further optionally, the server side may specifically, according to the network resource transferring instruction, subtract the transfer value from the network resource amount in the transfer account of the first user, and add the transfer value to the network resource amount in the transfer account of the second user. Alternatively,
further optionally, the server side may specifically instruct, according to the network resource transferring instruction, a third-party payment platform to subtract the transfer value from the network resource amount in the transfer account of the first user, and add the transfer value to the network resource amount in the transfer account of the second user. In the implementation manner, the specific network resource transferring operation may be performed by the third-party payment platform.

It should be noted that, by use of the method provided in this embodiment, various network resources can be transferred, which, for example, may be monetary resources, data traffic or the like of the user. For instance, the network resource of the first user may be a monetary resource of the user, which, for example, may be capital in a capital account of the first user. Correspondingly, transferring the network resource of the first user to the second user is actually a process of account transferring to the second user. The network resource of the first user may further be data traffic of the user, for example, 3G traffic or 4G traffic. Correspondingly, transferring the network resource of the first user to the second user is actually a process of reselling or passing on the network resource to the second user.

In addition, for different network resources, the user needs to be bound to different accounts. In other words, the first user and the second user may be bound to a variety of accounts in advance, each account corresponding to one network resource. On this basis, the server side may determine, from a variety of accounts bound to the first user, an account belonging to the type of the to-be-transferred network resource as the transfer account of the first user; and the server side determines, from a variety of accounts bound to the second user, an account belonging to the type of the to-be-transferred network resource as the transfer account of the second user.

Further, if the user is bound to a plurality of accounts for a same network resource, the user may further preset a default account, and in this way, the server side may directly select the default account as the transfer account of the user.

Further, in order to improve security of network resource transferring, the server side may, before performing the network resource transferring operation, confirm the network resource transferring operation. For example, it is possible to prompt the user to input a password and confirm, according to the password input by the user, whether the network resource transferring is a legal operation. When it is confirmed that the network resource transferring is a legal operation, the server side performs the network resource transferring operation, thus improving the security of the network resource transferring. It should be noted that the manner of confirming whether the network resource transferring is a legal operation is not limited to the manner of password confirmation.

Further, in order to improve the efficiency of network resource transferring between users, this embodiment allows the user to set a trusted instant messaging user, and an account of such a trusted instant messaging user can be set as a default account. For the default account, the server side can directly perform a network resource transferring operation without confirmation, to improve the transferring efficiency of network resources. For other accounts than the default account, when performing network resource transferring, the server side needs to make confirmation, and only when it is confirmed that the network resource transferring operation is a legal operation, can the network resource transferring operation be performed, to improve security of the network resource transferring.

In the method provided in this embodiment, the server side cooperates with the client to implement instant messaging and at the same time, implement transferring of network resources. In the process of transferring the network resources, the user is allowed to directly input network resource transferring information in an instant messaging window used during the instant messaging to perform network resource transferring, and does not need to jump among a plurality of pages; the user only needs to input the network resource transferring information and does not need to perform a multi-step operation, thus improving the transferring efficiency of network resources.

A specific implementation process of the technical solution of the present application is described in the following by taking account transferring as an example.

A special emoticon or symbol is predefined in an instant messaging tool such as QQ or WeChat to indicate an account transferring instruction, for example, the "wallet" icon shown in FIG. 3. The first user, in a process of communicating, e.g., chatting, with the second user, inputs a "wallet" icon in emoticons to indicate account transferring, and then inputs a number such as 100 behind the "wallet" icon to indicate the amount to be transferred. Optionally, the type of currency may be selected through user definition or a registered country of the user. The instant messaging client transmits the input "wallet" icon and number to the server side of the instant messaging tool according to an instruction of the first user.

At the server side of the instant messaging tool, an instant messaging account used by the user, e.g., a WeChat account weix001, is bound in advance to a plurality of accounts of multiple payment tools such as an Alipay account, a WeChat payment account, and a bank card account, and the user may further set a default payee account and a default payer account. The server side of the instant messaging tool maintains a mapping relationship between the instant messaging account and the payment accounts (which may be the default payee account and payer account). The user, when serving as a payer, acquires a default payment account of a default payment tool thereof to make payment. For the default payment account, the server side considers the account as a trusted payment account, and provides a password-free payment interface.

The server side, after receiving the "wallet" icon and the number transmitted by the client, parses the "wallet" icon into an account transferring instruction, at the same time, obtains that the to-be-transferred network resource is a monetary resource in a capital account of the first user, and obtains, according to the number 100 following the "wallet" icon, that the transfer amount is 100. The server side may obtain bound payment accounts according to two client accounts in communication. For example, the server side may acquire a default payer account of the first user and obtain a default payee account of the second user. Then, the server side may directly deduct 100 from the amount in the default payer account of the first user, and add 100 to the amount in the default payee account of the second user. Alternatively, the server side may also transmit information such as an account transferring instruction, a transfer amount, and a payer account and a payee account involved in account transferring to a third-party payment platform, instructing the third-party payment platform to accomplish account transfer processing. Here, the account transfer processing specifically refers to a process of deducting 100 from the amount in the default payer account of the first user by the third-party payment platform, and adding 100 to the amount in the default payee account of the second user.

In the above process, the first user can directly input an emoticon and a transfer amount corresponding to the account transferring instruction in an instant messaging window during the instant messaging, then the first client submits the emoticon and the transfer amount corresponding to the account transferring instruction to the server side to accomplish account transfer processing. The instant messaging client is relatively simple in the implementation logic of the account transferring, unlike the prior art that the instant messaging client needs to jump among a plurality of pages. This also simplifies operations of the user, the user does not need to perform a multi-step operation, and thus the account transferring efficiency is improved, which is favorable for improving user experience.

It should be noted that the method embodiments, for ease of description, are all expressed as a series of action combinations. However, those skilled in the art should be aware that the present application is not limited by the sequence of actions described, because some steps may be performed in another order or at the same time according to the present application. Besides, those skilled in the art should also be aware that the embodiments described in the specification all belong to preferred embodiments, and the actions and modules involved are not necessary for the present application.

In the foregoing embodiments, the description of each embodiment has its own focus; for the content that is not detailed in a certain embodiment, reference can be made to the relevant description of other embodiments.

FIG. 4 is a schematic structural diagram of a network resource processing apparatus according to an embodiment of the present application. The apparatus may be implemented in a first client of an instant messaging tool. As shown in FIG. 4, the apparatus includes: a receiving module 41 and a transmitting module 42.

The receiving module 41 is configured to receive network resource transferring information input in an instant messaging window by a first user using the first client during instant messaging of the first client with a second client.

The transmitting module 42 is configured to transmit the network resource transferring information received by the receiving module 41 to a server side, so that the server side transfers the network resource of the first user to a second user using the second client according to the network resource transferring information.

In an optional implementation manner, the receiving module 41 is further configured to: receive a transmitting instruction sent in the instant messaging window by the first user. Correspondingly, the transmitting module 42 is specifically configured to: transmit the network resource transferring information to the server side according to the transmitting instruction, so that the server side transfers the network resource of the first user to the second user according to the network resource transferring information.

Optionally, the network resource transferring information includes: a transfer shortcut key value and a transfer value.

Further, the transfer shortcut key value includes: at least one of an emoticon, a character, and voice information.

The network resource of the first user is a monetary resource or data traffic of the first user.

According to the network resource processing apparatus provided in this embodiment, a user is allowed to directly input network resource transferring information in an instant messaging window used during instant messaging to transfer network resources, and does not need to jump among a plurality of pages; the user only needs to input the network resource transferring information and does not need to perform a multi-step operation. Compared with the prior art, the network resource processing apparatus provided in this embodiment is relatively simple in the implementation logic of the network resource transferring function, user operations are also relatively simple, and thus the transferring efficiency of network resources can be improved.

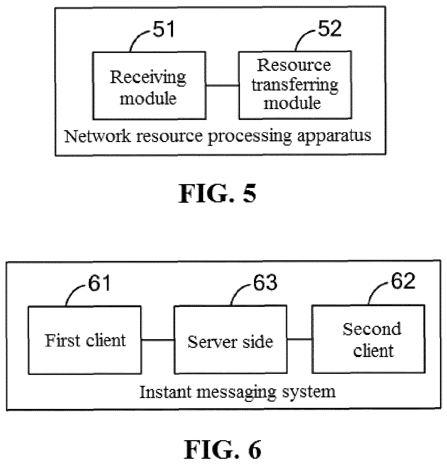

FIG. 5 is a schematic structural diagram of a network resource processing apparatus according to another embodiment of the present application. The apparatus may be implemented in a server side of an instant messaging tool. As shown in FIG. 5, the apparatus includes: a receiving module 51 and a resource transferring module 52.

The receiving module 51 is configured to receive network resource transferring information sent by a first client, the network resource transferring information being input to the first client through an instant messaging window by a first user using the first client during instant messaging of the first client with the second client.

The resource transferring module 52 is configured to transfer the network resource of the first user to a second user using the second client according to the network resource transferring information received by the receiving module 51.

Optionally, the network resource transferring information includes: a transfer shortcut key value and a transfer value.

Further, the transfer shortcut key value includes: at least one of an emoticon, a character, and voice information.

In an optional implementation manner, an implementation structure of the resource transferring module 52 may include: a parsing unit, a determination unit and a transfer processing unit.

The parsing unit is configured to parse the transfer shortcut key value into a network resource transferring instruction and a type of a to-be-transferred network resource.

The determination unit is configured to determine a transfer account of the first user and a transfer account of the second user according to the type of the to-be-transferred network resource.

The transfer processing unit is configured to perform a network resource transferring operation according to the network resource transferring instruction, the transfer account of the first user and the transfer account of the second user.

Further optionally, the transfer processing unit is specifically configured to: according to the network resource transferring instruction, subtract the transfer value from the network resource amount in the transfer account of the first user, and add the transfer value to the network resource amount in the transfer account of the second user. Alternatively,
the transfer processing unit is specifically configured to: instruct, according to the network resource transferring instruction, a third-party payment platform to subtract the transfer value from the network resource amount in the transfer account of the first user, and add the transfer value to the network resource amount in the transfer account of the second user.

Further, the determination unit is specifically configured to:
determine, from a variety of accounts bound to the first user, an account belonging to the type of the to-be-transferred network resource as the transfer account of the first user; and
determine, from a variety of accounts bound to the second user, an account belonging to the type of the to-be-transferred network resource as the transfer account of the second user.

The network resource of the first user is a monetary resource or data traffic of the first user.

The network resource processing apparatus provided in this embodiment cooperates with the network resource processing apparatus provided in the above embodiment to implement instant messaging and at the same time, implement transferring of network resources. In the process of transferring the network resources, the user is allowed to directly input network resource transferring information in an instant messaging window used during the instant messaging to perform network resource transferring, and does not need to jump among a plurality of pages; the user only needs to input the network resource transferring information and does not need to perform a multi-step operation, which can thus improve the transferring efficiency of network resources.

FIG. 6 is a schematic structural diagram of an instant messaging system according to an embodiment of the present application. As shown in FIG. 6, the system includes: a first client 61, a second client 62, and a server side 63.

The first client 61 is configured to receive network resource transferring information input in an instant messaging window by a first user using the first client 61 during instant messaging with the second client 62, and transmit the network resource transferring information to the server side 63.

The server side 63 is configured to receive the network resource transferring information, and transfer the network resource of the first user to a second user using the second client 62 according to the network resource transferring information.

Optionally, the network resource transferring information includes: a transfer shortcut key value and a transfer value.

Further, the transfer shortcut key value includes: at least one of an emoticon, a character, and voice information.

In an optional implementation manner, the server side 63 is specifically configured to:
parse the transfer shortcut key value into a network resource transferring instruction and a type of a to-be-transferred network resource;
determine a transfer account of the first user and a transfer account of the second user according to the type of the to-be-transferred network resource; and
according to the network resource transferring instruction, subtract the transfer value from the network resource amount in the transfer account of the first user, and add the transfer value to the network resource amount in the transfer account of the second user.

Reference can be made to the network resource processing apparatus shown in FIG. 4 for the implementation structure of the first client 61 in this embodiment, which is not limited thereto. Correspondingly, reference can be made to the network resource processing apparatus shown in FIG. 5 for the implementation structure of the server side 63 in this embodiment, which is not limited thereto.

The instant messaging system provided in this embodiment can implement instant messaging, and at the same time, implement transferring of network resources. In the process of transferring the network resources, the user is allowed to directly input network resource transferring information in an instant messaging window used during the instant messaging to perform network resource transferring, and does not need to jump among a plurality of pages; the user only needs to input the network resource transferring information and does not need to perform a multi-step operation, which can thus improve the transferring efficiency of network resources.

An embodiment of the present application provides a client device, including:
one or more processors;
a memory; and
one or more programs, the one or more programs being stored in the memory, and when executed by the one or more processors:
   receiving network resource transferring information input in an instant messaging window by a first user using the client device during instant messaging with another client device; and
   transmitting the network resource transferring information to a server, so that the server transfers the network resource of the first user to a second user using another client device according to the network resource transferring information.

According to the client device provided in this embodiment, a user is allowed to directly input network resource transferring information in an instant messaging window used during instant messaging to transfer network resources, and does not need to jump among a plurality of pages; the user only needs to input the network resource transferring information and does not need to perform a multi-step operation. Compared with the prior art, the client device provided in this embodiment is relatively simple in the implementation logic of the network resource transferring function, user operations are also relatively simple, and thus the transferring efficiency of network resources can be improved.

An embodiment of the present application provides a server, including:
one or more processors;
a memory; and
one or more programs, the one or more programs being stored in the memory, and when executed by the one or more processors:
   receiving network resource transferring information sent by a client device, the network resource transferring information being input to the client device through an instant messaging window by a first user using the client device during instant messaging of the client device with another client device; and
   transferring the network resource of the first user to a second user using another client device according to the network resource transferring information.

The server provided in this embodiment cooperates with the client device provided in the above embodiment to implement instant messaging and at the same time, implement transferring of network resources. In the process of transferring the network resources, the user is allowed to directly input network resource transferring information in an instant messaging window used during the instant messaging to perform network resource transferring, and does not need to jump among a plurality of pages; the user only needs to input the network resource transferring information and does not need to perform a multi-step operation, which can thus improve the transferring efficiency of network resources.

Those skilled in the art can clearly understand that, reference can be made to the corresponding description in the foregoing method embodiments for the specific working procedures of the system, apparatuses and units described above, and will not be repeated herein in order to make the description convenient and concise.

In the several embodiments provided in the present application, it should be understood that the disclosed system, apparatuses and methods may be implemented in other manners. For example, the apparatus embodiments described above are only exemplary. For example, division of the unit is merely division of a logical function and division in another manner may exist in actual implementation. For example, a plurality of units or components may be combined or integrated into another system, or some features may be ignored or not performed. In addition, the mutual coupling or direct coupling or communication connections displayed or discussed may be implemented by using some interfaces, and the indirect coupling or communication connections between the apparatuses or units may be implemented electrically, mechanically or in another form.

The units described as separate parts may be or may not be physically separate, and parts displayed as units may be or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in the form of hardware, or may be implemented in the form of hardware plus software functional units.

The integrated unit implemented in the form of a software functional unit may be stored in a computer-readable storage medium. The software functional unit is stored in a storage medium, and includes several instructions for instructing a computer device (which may be a personal computer, a server, a network device or the like) or a processor to perform a part of the steps of the methods described in the embodiments of the present application. The foregoing storage medium includes: any medium that can store a program code, such as a USB flash drive, a removable hard disk, a Read-Only Memory (ROM), a Random Access Memory (RAM), a magnetic disk, or an optical disc.

Finally, it should be noted that the above embodiments are merely provided for describing the technical solutions of the present application, but not intended to limit the present application. It should be understood by those of ordinary skill in the art that although the present application has been described in detail with reference to the foregoing embodiments, modifications can be made to the technical solutions described in the foregoing embodiments, or equivalent replacements can be made to some technical features in the technical solutions, as long as such modifications or replacements do not cause the essence of the corresponding technical solutions to depart from the spirit and scope of the technical solutions of the embodiments of the present application.

## Claims

1. A network resource processing method, comprising:
receiving, by a first client, network resource transferring information input in an instant messaging window by a first user using the first client during instant messaging with a second client; and
transmitting, by the first client, the network resource transferring information to a server side, so that the server side transfers the network resource of the first user to a second user using the second client according to the network resource transferring information.

2. The method according to claim 1, wherein the transmitting, by the first client, the network resource transferring information to a server side, so that the server side transfers the network resource of the first user to a second user using the second client according to the network resource transferring information comprises:
receiving, by the first client, a transmitting instruction sent in the instant messaging window by the first user; and
transmitting, by the first client, the network resource transferring information to the server side according to the transmitting instruction, so that the server side transfers the network resource of the first user to the second user according to the network resource transferring information.

3. The method according to claim 1 or 2, wherein the network resource transferring information comprises: a transfer shortcut key value and a transfer value.

4. The method according to claim 3, wherein the transfer shortcut key value comprises: at least one of an emoticon, a character, and voice information.

5. A network resource processing method, comprising:
receiving, by a server side, network resource transferring information sent by a first client, the network resource transferring information being input to the first client through an instant messaging window by a first user using the first client during instant messaging of the first client with the second client; and
transferring, by the server side, the network resource of the first user to a second user using the second client according to the network resource transferring information.

6. The method according to claim 5, wherein the network resource transferring information comprises: a transfer shortcut key value and a transfer value.

7. The method according to claim 6, wherein the transfer shortcut key value comprises: at least one of an emoticon, a character, and voice information.

8. The method according to claim 6 or 7, wherein the transferring, by the server side, the network resource of the first user to a second user using the second client according to the network resource transferring information comprises:
parsing, by the server side, the transfer shortcut key value into a network resource transferring instruction and a type of a to-be-transferred network resource;
determining, by the server side, a transfer account of the first user and a transfer account of the second user according to the type of the to-be-transferred network resource; and
performing, by the server side, a network resource transferring operation according to the network resource transferring instruction, the transfer account of the first user and the transfer account of the second user.

9. The method according to claim 8, wherein the performing, by the server side, a network resource transferring operation according to the network resource transferring instruction, the transfer account of the first user and the transfer account of the second user comprises:
according to the network resource transferring instruction, the server side subtracting the transfer value from the network resource amount in the transfer account of the first user, and adding the transfer value to the network resource amount in the transfer account of the second user; or
according to the network resource transferring instruction, the server side instructing a third-party payment platform to subtract the transfer value from the network resource amount in the transfer account of the first user, and add the transfer value to the network resource amount in the transfer account of the second user.

10. The method according to claim 8, wherein the determining, by the server side, a transfer account of the first user and a transfer account of the second user according to the type of the to-be-transferred network resource comprises:
determining, by the server side, from a variety of accounts bound to the first user, an account belonging to the type of the to-be-transferred network resource as the transfer account of the first user; and
determining, by the server side, from a variety of accounts bound to the second user, an account belonging to the type of the to-be-transferred network resource as the transfer account of the second user.

11. The method according to claim 8, wherein the network resource of the first user is a monetary resource or data traffic of the first user.

12. A network resource processing apparatus, implemented in a first client, wherein the network resource processing apparatus comprises:
a receiving module, configured to receive network resource transferring information input in an instant messaging window by a first user using the first client during instant messaging of the first client with a second client; and
a transmitting module, configured to transmit the network resource transferring information to a server side, so that the server side transfers the network resource of the first user to a second user using the second client according to the network resource transferring information.

13. The apparatus according to claim 12, wherein
the receiving module is further configured to receive a transmitting instruction sent in the instant messaging window by the first user; and
the transmitting module is specifically configured to transmit the network resource transferring information to the server side according to the transmitting instruction, so that the server side transfers the network resource of the first user to the second user according to the network resource transferring information.

14. The apparatus according to claim 12 or 13, wherein the network resource transferring information comprises: a transfer shortcut key value and a transfer value.

15. The apparatus according to claim 14, wherein the transfer shortcut key value comprises: at least one of an emoticon, a character, and voice information.

16. A network resource processing apparatus, implemented in a server side, wherein the network resource processing apparatus comprises:
a receiving module, configured to receive network resource transferring information sent by a first client, the network resource transferring information being input to the first client through an instant messaging window by a first user using the first client during instant messaging of the first client with the second client; and
a resource transferring module, configured to transfer the network resource of the first user to a second user using the second client according to the network resource transferring information.

17. The apparatus according to claim 16, wherein the network resource transferring information comprises: a transfer shortcut key value and a transfer value.

18. The apparatus according to claim 17, wherein the transfer shortcut key value comprises: at least one of an emoticon, a character, and voice information.

19. The apparatus according to claim 17 or 18, wherein the resource transferring module comprises:
a parsing unit, configured to parse the transfer shortcut key value into a network resource transferring instruction and a type of a to-be-transferred network resource;
a determination unit, configured to determine a transfer account of the first user and a transfer account of the second user according to the type of the to-be-transferred network resource; and
a transfer processing unit, configured to perform a network resource transferring operation according to the network resource transferring instruction, the transfer account of the first user and the transfer account of the second user.

20. The apparatus according to claim 19, wherein the transfer processing unit is specifically configured to:
according to the network resource transferring instruction, subtract the transfer value from the network resource amount in the transfer account of the first user, and add the transfer value to the network resource amount in the transfer account of the second user; or
instruct, according to the network resource transferring instruction, a third-party payment platform to subtract the transfer value from the network resource amount in the transfer account of the first user, and add the transfer value to the network resource amount in the transfer account of the second user.

21. The apparatus according to claim 19, wherein the determination unit is specifically configured to:
determine, from a variety of accounts bound to the first user, an account belonging to the type of the to-be-transferred network resource as the transfer account of the first user; and
determine, from a variety of accounts bound to the second user, an account belonging to the type of the to-be-transferred network resource as the transfer account of the second user.

22. The apparatus according to claim 19, wherein the network resource of the first user is a monetary resource or data traffic of the first user.

23. An instant messaging system, comprising: a first client, a second client, and a server side;
the first client being configured to receive network resource transferring information input in an instant messaging window by a first user using the first client during instant messaging with the second client, and transmit the network resource transferring information to the server side; and
the server side being configured to receive the network resource transferring information, and transfer the network resource of the first user to a second user using the second client according to the network resource transferring information.

24. The system according to claim 23, wherein the network resource transferring information comprises: a transfer shortcut key value and a transfer value.

25. The system according to claim 24, wherein the server side is specifically configured to:
parse the transfer shortcut key value into a network resource transferring instruction and a type of a to-be-transferred network resource;
determine a transfer account of the first user and a transfer account of the second user according to the type of the to-be-transferred network resource; and
according to the network resource transferring instruction, subtract the transfer value from the network resource amount in the transfer account of the first user, and add the transfer value to the network resource amount in the transfer account of the second user.
